# EUROPÄISCHE PATENTSCHRIFT

(11) **EP 1 797 414 B1**
(45) Veröffentlichungstag und Bekanntmachung des Hinweises auf die Patenterteilung: **03.12.2014**
(21) Anmeldenummer: 05794701.2
(22) Anmeldetag: 26.09.2005
(51) Int. Cl.: G01N 21/47, G01N 21/27, A01D 41/127

(54) **SPEKTROMETRISCHER MESSKOPF FÜR ERNTEMASCHINEN UND ANDERE LANDWIRTSCHAFTLICH GENUTZTE MASCHINEN**
SPECTROMETRIC MEASURING HEAD FOR HARVESTING MACHINES AND OTHER AGRICULTURAL MACHINES
TETE DE MESURE SPECTROMETRIQUE POUR MOISSONNEUSES ET AUTRES MACHINES AGRICOLES

(30) Priorität: 30.09.2004 DE 102004048103
(43) Veröffentlichungstag der Anmeldung: 20.06.2007
(73) Patentinhaber: DEERE & COMPANY, Moline, Illinois 61265-8098 (US)
(72) Erfinder: KORMANN, Georg, Dr., 66482 Zweibrücken (DE); FLOHR, Werner, 67661 Kaiserslautern-Dansenberg (DE); HOYME, Werner, 99510 Gebstedt (DE); CORRENS, Nico, 99425 Weimar (DE); GÖTZ, Martin, 07747 Jena (DE); RODE, Michael, 07743 Jena (DE)
(74) Vertreter: Holst, Sönke
(86) Internationale Anmeldenummer: PCT/EP2005/054813
(87) Internationale Veröffentlichungsnummer: WO 2006/035012

(56) Entgegenhaltungen:
- EP-A- 1 053 671
- WO-A-00/04373
- WO-A-99/58959
- WO-A-2005/106431

## Beschreibung

Die vorliegende Erfindung betrifft eine Anordnung zum Messen der Bestandteile geernteter landwirtschaftlicher Produkte, wobei die Messungen sowohl statisch als auch an einem Materialstrom durchgeführt werden können.

Der spektrometrische Messkopf ist dabei für den Einsatz auf Erntemaschinen und anderen landwirtschaftlich genutzten Maschinen vorgesehen, wobei entweder das Erntegut am Messkopf vorbeiströmt oder der Messkopf am Erntegut vorbeibewegt wird. Anhand der Messergebnisse können basierend auf Kalibrierungen unterschiedliche Inhaltsstoffe wie z. B. Feuchte, Protein, Stärke, Ölgehalt und Eigenschaften wie z. B. Schnittlänge, Faserzustand, Temperatur des Messgutes bestimmt werden.

Von den im Stand der Technik bekannten zahlreichen Systemen zur Analyse der Bestandteile geernteter Agrarprodukte hat sich die Spektroskopie im nahen Infrarotbereich (NIR) aufgrund verschiedener Vorteile durchgesetzt. Verglichen mit der bis zu Stunden dauernden Analyse der Bestandteile mittels bekannter Labormethoden liefert die NIR-Spektroskopie erste Analyseergebnisse bereits in dreißig bis sechzig Sekunden. Außerdem werden die analysierten Proben durch spektralphotometrische Techniken nicht verändert bzw. zerstört.

Bei einer typischen spektroskopischen Analyse werden Proben mit vorgewählten Wellenlängen bestrahlt und deren Transmissions- und/oder Reflexionsvermögen gemessen. Zur Erzeugung der dafür erforderlichen spezifischen Wellenlängen werden beispielsweise Filterräder, Dioden Arrays oder Beugungsgitter verwendet.

Wegen der beweglichen Teile sind Filterräder und Abtastbeugungsgitter für Erschütterung empfindlich und nicht zuverlässig, wenn sie Korn während des Erntens analysieren. Sie sind folglich nicht für die Verwendung auf Mähdreschern oder änderen landwirtschaftlichen Erntemaschinen, die mechanische Erschütterungen hervorrufen, geeignet.

Eine Feuchtemesseinrichtung und ein Verfahren zur Feuchtemessung in Erntemaschinen wird in der EP 0 908 087 B1 offenbart. Dabei wird die Feuchtemessvorrichtung mit einer Sensorzustandskontrollvorrichtung kombiniert, um sich die ansonsten erforderlichen messgutsbedingten und verarbeitungsbedingten Kalibrierungen zu ersparen. Die Kombination des Feuchtesensors mit einer Sensorzustandskontrollvorrichtung ermöglicht es, Fehlerzustände bei der Ermittlung des Feuchtesignals zu erkennen, zur Anzeige zu bringen, Korrekturmaßnahmen einzuleiten und/oder eine Kalibrierung durchzuführen. Die Sensorzustandskontrollvorrichtung besteht dabei aus Mikroprozessoren sowie einer geeigneten Auswertesoftware und kann in Abhängigkeit von den ermittelten Messstati (mit Plausibilitätskontrolle) unterschiedliche Korrektur-, Anzeige- oder Kalibriermaßnahmen auslösen. Über Eingabe- oder Speicherelemente können beispielsweise zusätzliche Informationen über das Erntegut (z. B. Mais, Weizen, Gerste, etc.) mit entsprechenden Zusatzangaben (trocken, nass, stark verunkrautet) vorgegeben werden. Diese Informationen werden bei der Auswertung der ermittelten Messwerte berücksichtigt. Dazu übermitteln die in einem Gehäuse angeordneten Feuchtesensoren die Feuchtemesswerte des hinweggeförderten Erntegutes. Die Sensoren bestehen beispielsweise aus einer Elektrode und einer Elektronik. Die vorgeschlagene Lösung bezieht sich allerdings nur auf die Bestimmung und Protokollierung der gemessenen Feuchtewerte des Erntegutes. Aussagen über die Zusammensetzung des Erntegutes lassen sich nicht treffen.

Auch das in der EP 0 960 557 B1 beschriebene Verfahren betrifft die Messung der Erntegutfeuchtigkeit auf einer Erntemaschine. Insbesondere werden dabei die Daten eines Feuchtesensors mit den Daten eines Massenstrom-Sensors kombiniert und zu einer Karte zusammengefasst, die den abgeleiteten Feuchtgehalt an mehreren Stellen des Feldes darstellt. Der Feuchtgehalt des Erntegutes wird dabei über dessen elektrische Leitfähigkeit bestimmt. Auch bei dieser Lösung können keinerlei Aussagen über die Zusammensetzung des Erntegutes getroffen werden.

Im Gegensatz zu den bisher beschriebenen Lösungen werden in den Schriften WO 99/040419 und WO 99/058959 Anordnungen und Verfahren zur Konzentrationsbestimmung der Bestandteile einer Probe geernteter Agrarprodukte beschrieben. Die Analyse erfolgt während des Ernteprozesses mittels einer spektometrischen Anordnung im nahen Infrarotbereich. Dabei werden anhand des Reflexionsvermögens der Probe bezüglich bestimmter Wellenlängen die prozentualen Bestandteile der Probe bestimmt. Die Anordnung zur Konzentrationsbestimmung ist optisch stabil und folglich für den Einsatz auf landwirtschaftlichen Maschinen, wie beispielsweise Mähdreschern geeignet. Die Messanordnung besteht aus einer Lichtquelle, zur Bestrahlung des Stromes von Agrarerzeugnisses mit einer Mehrzahl von Wellenlängen, einem optischen Empfänger zur Aufnahme der reflektierten Strahlung, einem Wellenlängenseparator zum Trennen der empfangenen Strahlung und einem Detektor, um aus der empfangenen, reflektierten und getrennten Strahlung Intensitätssignale zu erzeugen. Nur der Messkopf, der die Lichtquelle und den Empfänger enthält, ist dabei in unmittelbarer Nähe zum Messgut angeordnet. Die eigentliche Auswerteeinheit mit dem Wellenlängenseparator und dem Detektor ist beispielsweise im Führerhaus der Erntemaschine angeordnet. Zur Übertragung der Messdaten vom Messkopf zur Auswerteeinheit werden Glasfaserleitungen verwendet. Da bei der Analyse beispielsweise von Getreidekörnern das Absorptions- und Reflexionsverhalten von Probe zu Probe sehr stark abweicht, ist es erforderlich, die Spektrometer ständig zu eichen. Im Messkopf ist dazu ein Referenzstandard mit einem hohen Reflexionsvermögen angeordnet, der motorisch betätigt werden kann und für die Referenzierung den Strahlengang zum Messgut schließt. Die Referenzierung erfolgt in der Regel automatisch durch die Steuereinheit. Nachteilig wirkt sich bei dieser Lösung aus, dass Erschütterungen, die mit einer funktionierenden Erntemaschine verbunden sind, modulare Störungen in den optischen Fasern verursachen oder diese sogar beschädigen können. Eine Ausgestaltung der Lösung sieht eine räumliche Trennung der Messanordnung und der eine Anzeigeeinheit ausweisenden Auswerteeinheit vor. Eine Verbindung der Auswerteeinheit mit einer Erntemaschine ist aber nicht vorgesehen.

In der WO 99/040419 wird ein Spektrometer zum Messen der Bestandteile geernteter landwirtschaftlicher Produkte beschrieben, welches insbesondere in Kombination mit einem Mähdrescher zur Echtzeitanalyse von Getreide einsetzbar ist. Mit dem hierbei verwendeten, im nahen Infrarot-Bereich (NIR) arbeitenden Spektrometer können sowohl chemische als auch physikalische Eigenschaften unterschiedlicher Materialien analysiert werden. Bei der Analyse beispielsweise von Getreidekörnern weicht das Absorptions- und Reflexionsverhalten im Gegensatz zu gemahlenen Körnern von Probe zu Probe sehr stark ab. Um trotzdem exakte Messwerte erzielen zu können, ist es erforderlich, die Spektrometer ständig zu eichen. Dazu wird in der Regel die Probe durch eine Standardprobe ersetzt. Vom Spektrometer werden dann Standarddaten zur Eichung der Messanordnung zur Verfügung gestellt. Das reflektierte Licht wird über Lichtleiterkabel zu einem Beugungsgitter oder einem äquivalenten Bauelement geleitet und von diesem aufgespalten auf einen Detektor bzw. ein Detektorarray abgebildet. Durch Analyse der Intensitäten der reflektierten Strahlung lassen sich die Bestandteile mit ihrem prozentualen Anteil bestimmen. Nachteilig wirkt sich bei dieser Lösung aus, dass die Standardprobe im Messkopf angeordnet ist. Dadurch werden zwar verschiedene dynamische Faktoren, wie beispielsweise Veränderungen der Lichtquelle berücksichtigt, Einflüsse durch Verschmutzung des im Messkopf enthaltenen Fensters können allerdings nicht berücksichtigt werden und beeinflussen die Genauigkeit der Messergebnisse. Außerdem können Erschütterungen zu modularen Störungen in den optischen Fasern führen oder diese sogar beschädigen.

Eine Erntemaschine mit einem im NIR-Bereich arbeitenden Sensor zur Messung von Inhaltsstoffen in und/oder Eigenschaften von Erntegut wird in der EP 1 053 671 B1 beschrieben. Für den Nachweis organischer Inhaltsstoffe werden vorzugsweise Wellenlängen zwischen 400 nm und 1,7 mm verwendet. Der außerhalb einer landwirtschaftlichen Maschine angebrachte Sensor wird zweckmäßigerweise lösbar an einer geeigneten Schnittstelle einer Datenaufnahmeeinrichtung angeschlossen, so dass eine Bestimmung der Eigenschaften des von der landwirtschaftlichen Maschine aufgenommenen Ernteguts und/oder eine Ertragskartierung möglich ist. Die erfassten Messdaten können insbesondere mittels eines Rechners weiter verarbeitet werden. Durch zusätzliche Sensoren können u. a. der Durchsatz an Erntegut und die aktuelle Position (GPS) erfasst und gemeinsam mit den sich auf die Inhaltsstoffe bzw. die anderen Parameter beziehenden Messwerten georeferenziert abgespeichert werden.

In der noch nicht veröffentlichten Patentanmeldung DE 10 2004 021 448.4 wird ein spektrometrischer Reflexionsmesskopf mit interner Rekalibrierung beschrieben, bei dem im Gehäuse des Messkopfes zusätzlich mindestens zwei Standards, vorzugsweise ein Schwarz- und ein Weißstandard, zur internen Rekalibrierung vorhanden sind, die wahlweise in den Strahlengang des Reflexionsmesskopfes geschwenkt werden können. Nach der Erfassung der Messdaten beider Standards durch das Spektrometer erfolgt die Rekalibrierung des Reflexionsmesskopfes durch die Steuer- und Auswerteeinheit. Zusätzlich können zur Kalibrierung des Reflexionsmesskopfes vor der Inbetriebnahme der Messanordnung bzw. in bestimmten Zeitabständen mindestens zwei externe Standards vorhanden sein. Die Verbindung vom Messkopf zum Spektrometer erfolgt hierbei über faseroptische Verbindungen.

Ein System zum Messen von Bestandteilen landwirtschaftlicher Güter wird in der US 6418805 B1 beschrieben. Das System der vorliegenden Erfindung enthält einen Behälter zum Halten von Korn. Ein bewegbares Element ist innerhalb des Behälters positioniert, um das Korn innerhalb des Behälters auf eine Weise zu bewegen, die eine Kornströmung simuliert. Eine Sonde analysiert dabei das sich bewegende Korn in Echtzeit, wobei unterschiedliche Bestandteile des sich bewegenden Korns gleichzeitig aus dem gleichen Kornanteil bestimmt werden. Das vorliegende Erfassungssystem für Komproben ist zum Kalibrieren von Analysesystemen, die bereits in einem Gerät zum Verarbeiten von Korn enthalten sind oder die daran später installiert werden, geeignet, da die Rotation des Korns innerhalb des Behälters die Strömung des Korns auf einer Rutsche oder in einer Leitung eines solchen Geräts simuliert. Eine Eichung des Gerätes selbst ist nicht vorgesehen.

In der US 2002/0039186 A1 wird eine Anordnung und ein Verfahren zur spektroskopischen Analyse der körperlichen und chemischen Eigenschaften einer Probe beschrieben. Die Messanordnung kann dabei als Prüfspitze ausgebildet sein, um beispielsweise von einer Wagenladung Korn eine statistische Probe zu nehmen und zu analysieren. Die Analyse erfolgt dabei während sich die Gesamtprobe noch auf dem Fahrzeug oder in einem Behälter befindet. Ausgehend von den Eigenschaften dieser Probe wird auf die Eigenschaften und Bestandteile der Gesamtprobe geschlossen. In einer anderen Ausführung kann das Korn während des Abladevorganges von einem Messkopf analysiert werden, d. h. während es in Bewegung ist. Hierbei kann nahezu die gesamte Probe in Realzeit analysiert werden. Zur Kalibrierung verfügt der Messkopf über einen Blendenverschluss, der entweder das vom Messobjekt reflektierte Licht oder Referenzlicht auf den Detektor treffen lässt. Das Referenzlicht wird dabei aus dem Strahlengang der Beleuchtungsquelle ausgeblendet. Der Blendenverschluss kann auch als Referenzstandard ausgebildet sein und in eine Position gebracht werden, bei der kein Licht auf den Detektor fällt, um das Dunkelsignal zu erfassen. Durch eine vorhandene Steuerelektronik ist es möglich, das System zur Lichtquelle automatisch zu kalibrieren. Bei der Anordnung zur spektroskopischen Analyse wird die eigentliche Messanordnung, die als Prüfspitze oder Messkopf ausgeführt sein kann, über elektrische oder faseroptische Leitungen mit der eigentlichen Steuer- und Auswerteeinheit verbunden.

In der WO 00/04373 A1 wird eine Messanordnung zur spektroskopischen Untersuchung einer sich bewegenden Papierbahn beschrieben, die sich aus zwei an beiden Seiten der Papierbahn angeordneten Messköpfen zusammensetzt. Die Messköpfe enthalten jeweils interne Standards, die zur Referenzierung in den Strahlengang des von der Lichtquelle abgegebenen Lichts gedreht werden können. Die Leistung der Lichtquelle kann gesteuert werden, um eine geeignete Beleuchtungsstärke bereitzustellen.

Die meisten Systeme zur Bestimmung der Bestandteile einer Probe sind allerdings für den Laboreinsatz konzipiert. Zudem ist kein robuster Sensor auf dem Markt verfügbar, der Messwerte direkt auf ein Bus-System ausgeben kann. Zudem sind Schwarz/weiß - Referenzierungen sehr häufig notwendig.

Der Einsatz von Glasfaserkabeln in der Messstrecke verhindert die Ausnutzung der vollen Apertur des Detektors und birgt eine Fehlerquelle. Die bekannten Sensoren übertragen ihre Messdaten mit Kabeln.

Der vorliegenden Erfindung liegt die Aufgabe zugrunde, eine Anordnung zum Messen der Bestandteile geernteter landwirtschaftlicher Produkte zu entwickeln, die sowohl statische Messungen als auch an einem Materialstrom ermöglicht, und für den Einsatz auf Erntemaschinen und anderen landwirtschaftlich genutzten Maschinen geeignet ist. Die Messanordnung soll dabei in ein vorhandenes Bus-System der Maschine integriert werden können.

Erfindungsgemäß wird die Aufgabe durch die Merkmale des unabhängigen Anspruchs gelöst. Bevorzugte Weiterbildungen und Ausgestaltungen sind Gegenstand der abhängigen Ansprüche.

Der erfindungsgemäße spektrometrische Messkopf für Erntemaschinen und andere landwirtschaftlich genutzte Maschinen besteht aus einem mit einem Fenster versehenen Gehäuse, in dem eine Beleuchtungsquelle, eine Spektrometeranordnung und mindestens zwei Standards zur internen Rekalibrierung vorhanden sind. Diese Standards können dabei wahlweise in den Strahlengang des Messkopfes geschwenkt werden. Im Gehäuse sind zusätzlich eine Schnittstelle zu einem Bussystem und ein Prozessor angeordnet. Die Spektrometeranordnung ist mit einem Dispersionselement, einem Detektorarray und Optikbaugruppen zur direkten Abbildung der von der Probe reflektierten Strahlung auf das Detektorarray ausgestattet und umfasst einen Lichtintegrator zur Homogenisierung, um zu verhindern, dass Abbildungen aus der Struktur der Probe auf dem Detektorarray zu Messfehlern führen.

Die vorgeschlagene technische Lösung kann für die speziellen Messaufgaben der Bestimmung der Bestandteile landwirtschaftlicher Produkte während des Ernteprozesses genutzt werden. Da der Messkopf außer den Standards über keine beweglichen Teile verfügt, ist er äußerst robust und für den Einsatz auf Fahrzeugen geeignet. Mit dem beschriebenen Messkopf sind sowohl statische Messungen als auch Messungen eines Materialstroms möglich. In Auswertung der Intensitätsverteilung der reflektierten Strahlung können basierend auf Kalibrierungen unterschiedliche Inhaltsstoffe, wie beispielsweise Feuchte, Protein, Stärke, Ölgehalt und Eigenschaften wie Schnittlänge, Faserzustand, Temperatur der Probe bestimmt werden.

Der Messkopf ist für die Anwendung im NIR-Bereich vorgesehen, um beispielsweise den Feuchtgehalt und den Gehalt an Fett, Stärke, Eiweiß und dgl. für Proben aus der Land- und Nahrungsgüterwirtschaft zu bestimmen.

Für die Nutzung anderer Spektralbereiche ist die zu verwendende Spektrometeranordnung entsprechend anzupassen; der Messkopf kann für den gesamten Spektralbereich verwendet werden.

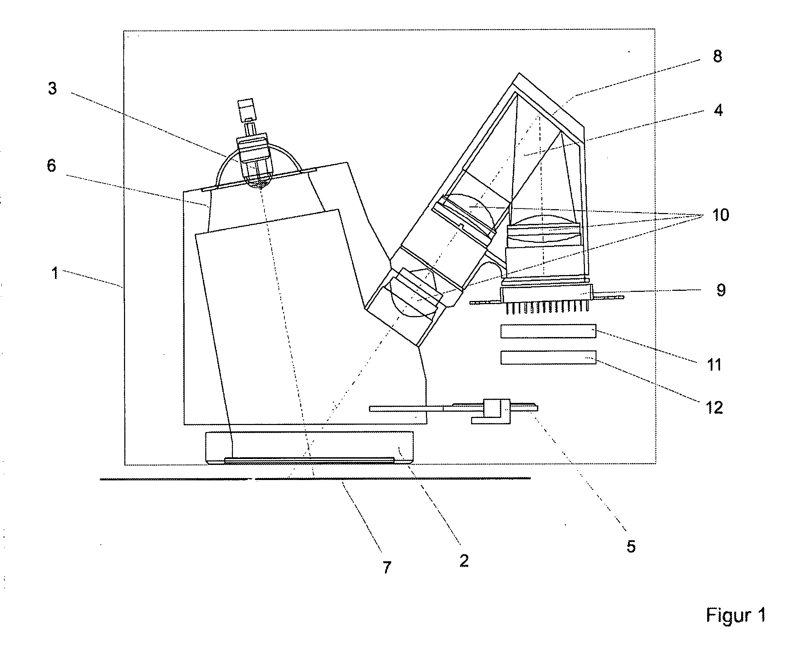

Die Erfindung wird nachfolgend anhand von Ausführungsbeispielen näher beschrieben.
Dazu zeigt
- Figur 1:: den Prinzipaufbau des erfindungsgemäßen spektrometrischen Messkopfes.

Der erfindungsgemäße spektrometrische Messkopf für Erntemaschinen und andere landwirtschaftlich genutzte Maschinen besteht aus einem mit einem Fenster **2** versehenen Gehäuse **1,** in dem eine Beleuchtungsquelle **3,** eine Spektrometeranordnung **4** und mindestens zwei Standards **5** zur internen Rekalibrierung vorhanden sind. Diese Standards **5** können dabei wahlweise in den Strahlengang des Messkopfes geschwenkt werden. Im Gehäuse 1 sind zusätzlich ein Prozessor **11** zur Erfassung und Bearbeitung der Messwerte und eine Schnittstelle **12** zu einem Bussystem angeordnet.

Für das Fenster **2** im Gehäuse **1,** durch das sowohl die Beleuchtungsstrahlung als auch die von der Probe **7** reflektierte Strahlung fällt, wird vorzugsweise Saphir verwendet. Saphir ermöglicht eine ausreichend hohe Standzeit des Fensters **2,** auch bei hoch abrasiven Proben (z. B. sandhaltige Proben **7).**

Die Lampenleistung, der vorzugsweise über einen Reflektor **6** verfügenden Beleuchtungsquelle **3** ist automatisch regelbar, um die Spektrometeranordnung **4** an die verschiedenen Reflexionsverhalten unterschiedlichster Proben **7** anzupassen. Dazu wird die Lampenleistung für Proben **7** von überwiegend dunkler Farbe erhöht, ohne die Spektrometeranordnung neu zu kalibrieren.

Dadurch wird gewährleistet, dass die Integrationszeit der Spektrometeranordnung **4** nahezu konstant bleibt. In Verbindung mit der internen Referenzierung kann somit jederzeit eine an die jeweiligen Proben- und Messbedingungen optimierte Messung erfolgen. Insbesondere für die automatische Spektrenverarbeitung durch den Prozessor **11** kann die Regelung der Lampenleistung die Messergebnisse optimieren.

Die Spektrometeranordnung **4** besteht mindestens aus einem Dispersionselement **8** und einem Detektorarray **9** und verfügt über abbildende Optikbaugruppen **10.** Durch die direkte Abbildung der von der Probe **7** reflektierten Strahlung auf das Detektorarray **9** können je nach Probe **7** Abbildungen aus der Struktur der Probe **7** auf dem Detektorarray **9** zu Messfehlern führen. Um dies zu verhindern ist zur Homogenisierung ein Lichtintegrator vorgesehen.

Die im Messkopf vorhandenen zwei Standards **5** dienen der internen Rekalibrierung der Messanordnung. Zur Kalibrierung des Messkopfes vor der Inbetriebnahme der Messanordnung bzw. in bestimmten Zeitabständen sind mindestens zwei zusätzliche externe Standards (nicht dargestellt) vorhanden. Sowohl als interne 5 als auch als externe Standards werden vorzugsweise Schwarz- und Weißstandards verwendet, die durch zusätzliche, anwendungsspezifische interne Standards für weitergehende Rekalibrierungen ergänzt werden können.

Die Standards werden vorzugsweise motorisch betrieben und können automatisch und/oder manuell gesteuert werden. Die interne und externe Referenzierung ermöglicht eine automatische Systemüberwachung, eine Überwachung des Fensters 2 auf Beschädigung, Verschmutzung, usw. sowie die Möglichkeit, unterschiedliches Fenstermaterial zu verwenden, ohne dass die existierenden Kalibrationen verändert oder angepasst werden müssen.

Nach Erfassung der Messdaten der beiden internen Standards 5 durch die Spektrometeranordnung **4** erfolgt unter Nutzung der Messwerte der Kalibrierung des Reflexionsmesskopfes vor der Inbetriebnahme die Rekalibrierung des Messkopfes. Nachdem die internen Standards **5** aus dem Strahlengang ausgeschwenkt wurden, ist der Messkopf für die nächste Messung der Probe **7** bereit.

Obwohl am internen Messort andere Messintensitäten der Beleuchtungsquelle 3 als am externen Probenmessort bestehen, wird durch die geometrische Anordnung der internen Standards 5 sichergestellt, dass sich spektrale Intensitätsänderungen an beiden Messorten mit gleicher Proportionalität vollziehen. Änderung der Empfindlichkeit und des Dunkelsignals des Detektorarrays **9** sind unabhängig vom Messort und damit intern und extern gleichermaßen wirksam. Dadurch kann mit der in festgelegten Zeitabschnitten ausgeführten internen Rekalibrierung eine durch die genannten Einflüsse verursachte Messwertänderung im Langzeitbetrieb vermieden werden.

Bei der erfindungsgemäßen Lösung kann die interne Rekalibrierung in kurzen Zeitabständen automatisch nach einem vorher festgelegten Zeitrhythmus oder nach Bedarf erfolgen. Sowohl der Messkopf als auch die Probe 7 verbleiben während der Kalibrierung und auch Rekalibrierung in der normalen Messposition.

Die Rekalibrierung kann nach Ablauf einer bestimmten Zeitspanne (z. B. nach 10 min) oder auch nach Feststellung eines nicht plausiblen Ausgabewerts des Messkopfes selbsttätig durchgeführt werden. Ein derartiger, nicht plausibler Ausgabewert liegt beispielsweise dann vor, wenn der Ausgabewert des Messkopfes über eine bestimmte Zeitspanne (z. B. 10 s) konstant ist, oder wenn er ein Vorhandensein von Erntegut signalisiert, während kein Erntegut durch den Förderkanal strömt, was anhand des Betriebszustands von Förderelementen oder durch andere Sensoren, z. B. Lichtschranken, nachgewiesen werden kann.

Die im Messkopf vorhandene Schnittstelle **12** zu einem Bussystem ist vorzugsweise als drahtlose Verbindung zur Datenübertragung und/oder Kalibrierung und/oder Systemdiagnose ausgeführt ist und kann Standards, wie CAN, USB, RS232, Wireless LAN u. a. unterstützen. Es ist aber auch möglich die Verbindung vom Messkopf zum Bussystem über elektrische und/oder faseroptische Leitungen herzustellen.

Zusätzlich ist im Gehäuse ein Prozessor **11** zur Erfassung und Bearbeitung der Messwerte angeordnet. Von diesem Prozessor **11** können sowohl Rohdaten, d. h. die Vorverarbeitung der Daten auf spektraler Basis, als auch berechnete Ergebnisse erzeugt werden, die dann über die vorhandene Schnittstelle **12** zu einem Bussystem übertragen werden können. Außerdem enthält der Prozessor **11** die Software für das notwendige Busmanagement. Durch den Prozessor **11** entsteht ein vollständig autark arbeitendes System. Damit der Messkopf in einem weiten Arbeitstemperaturbereich auch ohne zusätzliche Kühlung des Detektorarrays **9** einsetzbar ist, beinhaltet der Prozessor **11** eine entsprechende Kompensationselektronik, die die sich verändernden Parameter des Detektorarrays **9** bei Temperaturwechsel ausgleicht.

Bei dem erfindungsgemäßen spektrometrischen Messkopf für Erntemaschinen und andere landwirtschaftlich genutzte Maschinen wird die zu messende Probe **7** mit einer Beleuchtungsquelle **3** bestrahlt. Die von der Probe **7** reflektierte Strahlung wird direkt vom Diodenarray **9** der Spektrometeranordnung **4** aufgenommen. Anhand der Intensitätsverteilung der reflektierten Strahlung können basierend auf Kalibrierungen unterschiedliche Inhaltsstoffe, wie beispielsweise Feuchte, Protein, Stärke, Ölgehalt und Eigenschaften wie Schnittlänge, Faserzustand, Temperatur der Probe bestimmt werden. Mit dem beschriebenen Messkopf sind sowohl statische Messungen als auch Messungen eines Materialstroms möglich. Dadurch, dass der Messkopf außer den Standards 5 über keine beweglichen Teile verfügt, ist er äußerst robust und für den Einsatz auf Fahrzeugen geeignet.

Die Einschränkung des Wellenlängenbereiches erlaubt den Einsatz des Messkopfes in einem weiten Temperaturbereich ohne aufwendige und kostenintensive Kühlung.

Mit der erfindungsgemäßen Anordnung wurde ein spektrometrischer Messkopf für Erntemaschinen und andere landwirtschaftlich genutzte Maschinen vorgeschlagen, mit dem die Bestandteile geernteter landwirtschaftlicher Produkte auch während des Erntevorganges auf der Erntemaschine bestimmt werden können. Der erfindungsgemäße Messkopf kann an stationären Anlagen oder beliebigen Erntemaschinen verwendet werden, bei denen das Erntegut am Messkopf vorbeiströmt, beispielsweise in Mähdreschern oder Feldhäckslern, oder der Messkopf am Erntegut vorbeibewegt wird, beispielsweise an einem Schwad.

Durch die drahtlose Kommunikation des Messkopfes zu einer Steuer- und Auswerteeinheit lässt sich der Messkopf in ein vorhandenes Bus-System der Erntemaschine integrieren. Durch die wahlweise Übertragung von Rohwert zur Weiterverarbeitung oder Messergebnissen zur Ausgabe ist die Lösung sehr flexibel einsetzbar. Durch den im Messkopf vorhandenen Prozessor und die automatische interne und externe Referenzierung entsteht ein vollständig autark arbeitendes System.

Durch die interne Rekalibrierung bietet sich die Möglichkeit einer automatischen Systemkontrolle, einer Überwachung des Probenfensters auf Beschädigung oder Verschmutzung, sowie der Verwendung unterschiedlicher Fenstermaterialien, ohne dass die existierenden Kalibrationen verändert oder angepasst werden müssen.

Dadurch, dass die von der Probe reflektierte Strahlung direkt auf das Spektrometer abgebildet wird, ermöglicht das System eine höhere Apertur. Hieraus resultieren eine höhere Empfindlichkeit, eine erforderliche niedrigere Lampenleistung, eine geringere Probenerwärmung und ein daraus resultierender kleinerer Messfehler.

## Patentansprüche

1. Spektrometrischer Messkopf für Erntemaschinen und andere landwirtschaftlich genutzte Maschinen bestehend aus einem, mit einem Fenster (2) versehenen Gehäuse (1), in dem eine Beleuchtungsquelle (3), eine Spektrometeranordnung (4) mit einem Dispersionselement (8), einem Detektorarray (9) und Optikbaugruppen (10) zur direkten Abbildung der von der Probe (7) reflektierten Strahlung auf das Detektorarray (9), ein Prozessor (11) zur Erfassung und Bearbeitung der Messwerte und eine Schnittstelle (12) zu einem Bussystem angeordnet sind, **dadurch gekennzeichnet, dass** im Gehäuse (1) mindestens zwei Standards (5) zur internen Rekalibrierung vorhanden sind, die wahlweise in den Strahlengang des Messkopfes geschwenkt werden können, und dass die Spektrometeranordnung (4) einen Lichtintegrator zur Homogenisierung umfasst, um zu verhindern, dass Abbildungen aus der Struktur der Probe (7) auf dem Detektorarray (9) zu Messfehlern führen.

2. Spektrometrischer Messkopf nach Anspruch 1, bei dem die Lampenleistung der vorzugsweise über einen Reflektor (6) verfügenden Beleuchtungsquelle (3) zur Anpassung des Detektorarrays (9) der Spektrometeranordnung (4) an die verschiedenen Reflexionsverhalten der einzelnen Proben (7) automatisch geregelt werden kann.

3. Spektrometrischer Messkopf nach Anspruch 1, bei dem zur Kalibrierung des Messkopfes vor der Inbetriebnahme der Messanordnung bzw. in bestimmten Zeitabständen mindestens zwei zusätzliche externe Standards vorhanden sind.

4. Spektrometrischer Messkopf nach mindestens einem der Ansprüche 1 und 3, bei dem als Standards für die interne und externe Rekalibrierung Schwarz- und Weißstandards verwendet werden.

5. Spektrometrischer Messkopf nach mindestens einem der Ansprüche 1, 3 und 4, bei dem die Standards vorzugsweise motorisch betrieben sind und automatisch und/oder manuell gesteuert werden können.

6. Spektrometrischer Messkopf nach mindestens einem der vorgenannten Ansprüche, bei dem zusätzliche, anwendungsspezifische interne Standards für weitergehende Rekalibrierungen vorhanden sein können.

7. Spektrometrischer Messkopf nach Anspruch 1, bei dem die Schnittstelle (12) zu einem Bussystem als drahtlose Verbindung zur Datenübertragung und/oder Kalibrierung und/oder Systemdiagnose ausgeführt ist.

8. Spektrometrischer Messkopf nach mindestens einem der Ansprüche 1 und 7, bei dem die Schnittstelle (12) Standards, wie CAN, USB, RS232, Wireless LAN u. a. unterstützen kann.

## Claims

1. Spectrometric measuring head for harvesting machines and other machines used in agriculture, comprising a housing (1) which is provided with a window (2) and in which there are arranged an illumination source (3), a spectrometer arrangement (4) with a dispersion element (8), a detector array (9) and optical modules (10) for directly projecting onto the detector array (9) the radiation reflected by a sample (7), a processor (11) for acquiring and processing the measured values, and an interface (12) to a bus system, **characterized in that** there are present in the housing (1) at least two standards (5) for internal recalibration which can optionally be swivelled into the beam path of the measuring head, and **in that** the spectrometer arrangement (4) comprises a light integrator for homogenization, in order to prevent images of the structure of the sample (7) on the detector array (9) from leading to measuring errors.

2. Spectrometric measuring head according to Claim 1, in which the lamp power of the illumination source (3), which preferably has a reflector (6), can be automatically regulated to adapt the detector array (9) of the spectrometer arrangement (4) to the various reflection behaviours of the individual samples (7).

3. Spectrometric measuring head according to Claim 1, in which in order to calibrate the measuring head at least two additional external standards are present before the commissioning of the measuring arrangement and/or at specific time intervals.

4. Spectrometric measuring head according to at least one of Claims 1 and 3, in which black standards and white standards are used as standards for the internal and external recalibration.

5. Spectrometric measuring head according to at least one of Claims 1, 3 and 4, in which the standards are preferably motor operated and can be controlled automatically and/or manually.

6. Spectrometric measuring head according to at least one of the preceding claims, in which additional, application-specific internal standards can be present for further reaching recalibrations.

7. Spectrometric measuring head according to Claim 1, in which the interface (12) to a bus system is designed as a wireless link for data transmission and/or calibration and/or system diagnosis.

8. Spectrometric measuring head according to at least one of Claims 1 and 7, in which the interface (12) can support standards such as CAN, USB, RS232 and Wireless LAN etc.

## Revendications

1. Tête de mesure spectrométrique pour moissonneuses et autres machines agricoles, composée d'un carter (1) pourvu d'une fenêtre (2) dans lequel sont disposés une source d'éclairage (3), un agencement de spectrométrie (4) doté d'un élément de dispersion (8), d'une batterie de détecteurs (9) et de modules optiques (10) permettant de représenter directement le rayonnement réfléchi par un échantillon (7) sur la batterie de détecteurs (9), un processeur (11) permettant de détecter et de traiter les valeurs de mesure et une interface (12) avec un système de bus, **caractérisée en ce que** le carter (1) comporte au moins deux standards (5) de réétalonnage interne, lesdits standards pouvant être pivotés au choix dans le trajet de rayonnement de la tête de mesure, et que l'agencement de spectrométrie (4) comprend un intégrateur de lumière servant à l'homogénéisation, pour empêcher que des déformations provenant de la structure de l'échantillon (7) sur la batterie de détecteurs (9) n'induisent des erreurs de mesure.

2. Tête de mesure spectrométrique selon la revendication 1, dans laquelle la puissance de lampe de la source d'éclairage (3) disposant de préférence d'un réflecteur (6) peut être réglée automatiquement pour adapter la batterie de détecteurs (9) de l'agencement de spectrométrie (4) aux différents comportements de réflexion des échantillons (7) individuels.

3. Tête de mesure spectrométrique selon la revendication 1, dans laquelle au moins deux standards externes supplémentaires sont présents pour étalonner la tête de mesure avant la mise en service de l'agencement de mesure et/ou à des intervalles de temps définis.

4. Tête de mesure spectrométrique selon au moins l'une quelconque des revendications 1 et 3, dans laquelle les standards utilisés pour le réétalonnage interne et externe sont les standards noir et blanc.

5. Tête de mesure spectrométrique selon au moins l'une quelconque des revendications 1, 3 et 4, dans laquelle les standards sont de préférence entraînés de façon motorisée et peuvent être commandés automatiquement et/ou manuellement.

6. Tête de mesure spectrométrique selon au moins une des revendications précédentes, dans laquelle les standards internes propres à une application supplémentaires peuvent en outre être présents pour réaliser des réétalonnages ultérieurs.

7. Tête de mesure spectrométrique selon la revendication 1, dans laquelle l'interface (12) avec un système de bus prend la forme d'une liaison sans fil servant à la transmission de données et/ou à l'étalonnage et/ou au diagnostic de système.

8. Tête de mesure spectrométrique selon au moins l'une quelconque des revendications 1 et 7, dans laquelle l'interface (12) peut supporter des standards, tels que CAN, USB, RS232, LAN sans fil entre autres.
